# EUROPÄISCHE PATENTSCHRIFT

(11) **EP 0 681 409 B1**
(45) Veröffentlichungstag und Bekanntmachung des Hinweises auf die Patenterteilung: **18.07.2001**
(21) Anmeldenummer: 95104116.9
(22) Anmeldetag: 21.03.1995
(51) Int. Cl.: H04Q 11/04, H04M 11/06

(54) **Digitales Übertragungssystem für Basisanschlüsse**
Digital transfer system for basic rate terminals
Système de transfert numérique pour des raccords à débit de base

(30) Priorität: 27.04.1994 DE 4415225
(43) Veröffentlichungstag der Anmeldung: 08.11.1995
(73) Patentinhaber: Dölzer, Uwe Dipl.-Ing., D-12203 Berlin (DE)
(72) Erfinder: Dölzer, Uwe Dipl.-Ing., D-12203 Berlin (DE)
(74) Vertreter: Gulde, Klaus W., Dipl.-Chem.

(56) Entgegenhaltungen:
- EP-A- 0 570 749
- GB-A- 2 249 927
- US-A- 5 210 745
- NTT REVIEW, Bd. 1, Nr. 2, Juli 1989, TOKYO JP, Seiten 35-45, XP000066175 EGAWA ET AL.: "System technologies used in realising INS-Net'89 service enhancements"
- IEEE INTERNATIONAL CONFERENCE ON COMMUNICATIONS, Bd. 4, 15.April 1990, ATLANTA US, Seiten 1637-1642, XP000146059 LIN: "Residential ISDN services: Information service architecture"

## Beschreibung

Die Erfindung bezieht sich auf ein digitales Übertragungssystem für Basisanschlüsse (S₀/U_{P0}-Schnittstelle) im ISDN für private Telekommunikationsanlagen zum Anschluß von Endgeräten.

Im privaten Bereich sind zwei grundsätzliche Betriebsweisen von Telekommunikationseinrichtungen bekannt. Der Punkt-zu-Punkt-Betrieb (Sternstruktur) ist bei analogen Anschlüssen gebräuchlich. Im ISDN wird in diesem Fall an einen Schnittstellenanschluß S₀ des Netzabschlusses nur eine Endeinrichtung engeschaltet. Die S₀-Schnittstelle ist international festgelegt und bildet den eigentlichen Benutzeranschluß im ISDN und damit die Grenze zwischen Teilnehmereinrichtungen und dem öffentlichen Netz, sie ist der Basisanschluß. Die S₀-Schnittstelle liegt hinter dem Netzabschluß. Weitere Schnittstellenschaltungen erlauben den Anschluß weiterer Endeinrichtungen. Die erzielbare Reichweite der Übertragung ist in vielen Anwendungsfällen unbefriedigend. Nachteilig ist des weiteren die Vielzahl von notwendigen Übertragungsleitungen.

Die Punkt-zu-Mehrpunkt-Verbindung (passiver Bus) ermöglicht die Anschaltung mehrerer Endeinrichtungen an einen Schnittstellenanschluß S₀ des Netzabschlusses. Prinzipiell bietet die S₀-Schnittstelle bisher die Möglichkeit, bis zu 8 verschiedene Endgeräte anzuschließen, von denen jeweils zwei gleichzeitig betrieben werden können. Der Anschluß erfolgt über eine Vierdrahtleitung. Auch hier ist die Schnittstellendämpfung und insbesondere die Laufzeit zwischen dem Netzabschluß und der letzten Endeinrichtung ausschlaggebend für die Ausdehnung der installierten Anlage. Die erzielbare Reichweite von wenigen 100 Metern ist unbefriedigend. Der technische Aufwand für größere Reichweiten ist hoch.

Mit dem EP 0 570 749 A2 ist bereits eine Schaltungsanordnung zur digitalen Übertragung nachrichtentechnischer Signale zwischen einer Teilnehmerseite und einer Vermittlungsstelle bekannt, bei der die digitalen Anschlußseiten der Teilnehmer und der Vermittlungsstelle an Multiplexer angeschlossen sind, die über Umsetzer mit einer Zweidrahtleitung miteinander verbunden sind. Durch die Multiplex-Übertragung wird es möglich, teilnehmerseitig mehr als 4 Teilnehmer anzuschließen, wobei keinem Teilnehmer ein Sprachkanal fest zugeordnet ist, sondern durch die Multiplexer jeweils eine Verbindung zur Vermittlungsstelle hergestellt wird. Es können jedoch nach wie vor nicht mehr als vier Sprachkanäle gleichzeitig genutzt werden.

Von daher ist es Aufgabe der Erfindung, ein digitales Übertragungssystem für Basisanschlüsse (S₀/U_{P0}-Schnittstelle) im ISDN für private Telekommunikations-Anlagen zum Anschluß von Endgeräten zu entwickeln, mit dem eine Vielzahl von Endgeräten über eine Schnittstelle mit einer geringen Anzahl von Leitungen angeschaltet werden kann.

Die Lösung dieser Aufgabe ergibt sich aus den kennzeichnenden Merkmalen des Anspruches 1. Mit einem erfindungsgemäßen Übertragungssystem können 12 ISDN-Basisanschlüsse (S₀-Schnittstelle) transparent über eine 2 Mbit/s-Strecke übertragen werden. Ohne Repeater darf die Leitungslänge bei z. B. 0,6 mm Leiterdurchmesser bis zu 2,6 km (43 Dezibel) betragen. Die Reichweite der S₀-Schnittstelle wird von ca. 200 m (bei einer herkömmlichen Übertragung ohne Multiplexer) auf ca. 2,7 km erhöht. Das aus zwei identischen, gemäß Anspruch 1 aufgebauten Multiplex-Adaptern bestehende Übertragungssystem ermöglicht eine schnelle, mit geringem technischen und ökonomischen Aufwand verbundene Kapazitätserweiterung vorhandener Leitungen mindestens um den Faktor 12. Zusätzlich wird die von der Telekommunikationsanlage zum Teilnehmer zulässige Streckenlänge von z. B. 200 m auf mindestens 2,7 km erhöht, ohne daß weitere Schnittstellen, z. B. U-Schnittstellen, und teure Netzabschlüsse notwendig werden. Es können sowohl Neuinstallationen von ISDN-Telekommunikationsanlagen als auch Umrüstungen von analogen Telekommunikationsanlagen auf ISDN-Telekommunikationsanlagen mit diesen Vorteilen erfolgen. Bei der Erweiterung bestehender ISDN-Kommunikationsanlagen können über das bestehende Netz z. B. bis zu 11 weitere Teilnehmer ohne Einschränkungen und ohne den normalen Firmenbetrieb zu stören, angeschlossen werden. Aufwendige und kostspielige Kabelverlegungen sind nicht notwendig. Ebenso ist das erfindungsgemäße Übertragungssystem vorteilhaft zur Herstellung von Festverbindungen zwischen Telekommunikationsanlagen und Unteranlagen geeignet. Über nur vier Adern können z.B. 12 Basisanschlüsse über eine Entfernung von mindestens 2,6 km bei Verwendung von Kupfer-Adern mit 0,6 mm Leiterdurchmesser permanent verbunden werden.

Die Anschaltung von Endeinrichtungen in abgesetzten Gebäuden, z.B. innerhalb eines Firmengeländes, ist ohne teure Verlegungs- und Erdarbeiten möglich. Die bestehenden Querverbindungen zwischen Gebäuden können mit dem Übertragungssystem in ihrer Leitungskapazität z.B. verzwölffacht werden. Die bisher häufig zur Leitungseinsparung in abgesetzten Gebäuden installierten Unteranlagen werden bei Einsatz des Übertragungssystems eingespart. Der Leitungsbedarf für die Installation der Teilnehmer am entfernten Ort ist nicht größer als beim Einsatz einer Unteranlage. Zusätzlich wird für den Nutzer die Bedienung vereinfacht, weil nicht mehr zwischen einem Unteranlagenverkehr und einem Hauptanlagenverkehr zu unterscheiden ist.

Das Übertragungssystem ist mit Vorteil auch bei Inhaus-Vernetzungen (LAN) anzuwenden.

Die das Übertragungssystem bildenden Multiplex-Adapter sind platzsparend auf jeweils einer Doppeleuropakarte aufgebaut.

Weitere vorteilhafte Ausgestaltungen der Erfindung ergeben sich aus den Unteransprüchen.

Die Erfindung ist nachfolgend anhand eines in den Zeichnungen dargestellten Ausführungsbeispieles eines digitalen Übertragungssystems näher erläutert.
Es zeigen:
- Fig. 1: die schematische Darstellung des digitalen Übertragungssystems und
- Fig. 2: das Blockschaltbild eines Multiplex-Adapters im Übertragungssystem nach Fig.1.

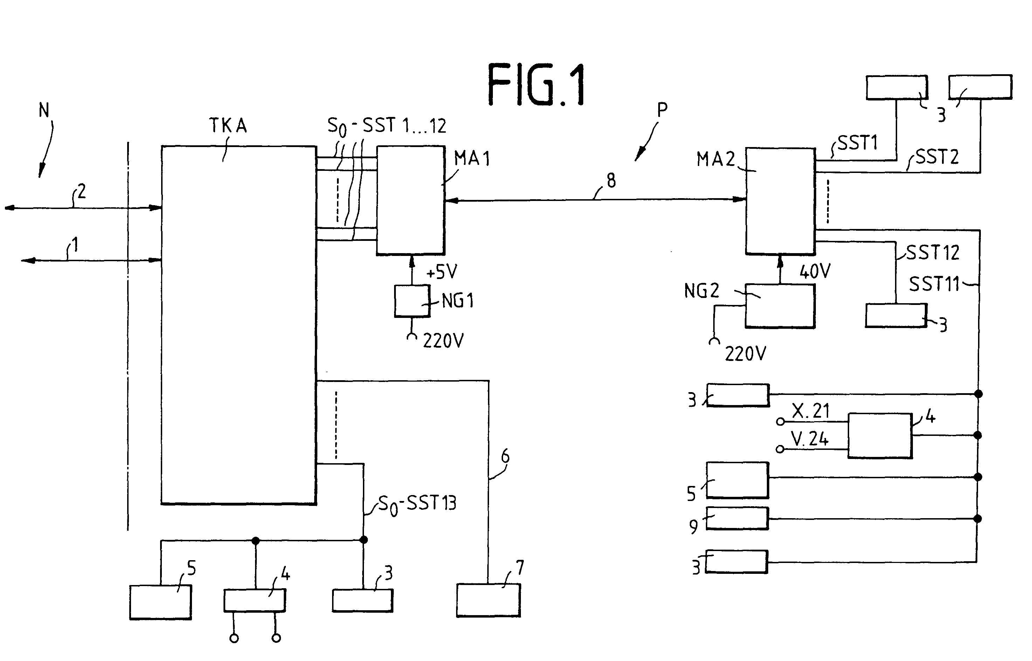

In der Fig. 1 ist in einer schematischen Darstellung das digitale Übertragungssystem zur Erweiterung einer bestehenden ISDN-Kommunikationsanlage TKA beschrieben.

Das öffentliche Netz N ist beispielsweise über eine U_{K0}- oder S₀-Schnittstelle 1 oder eine S2m-Schnittstelle 2 mit einer bekannten ISDN-Telekommunikationsanlage TKA zum privaten Netz P abgeschlossen. An der Telekommunikationsanlage TKA befinden sich u.a. 12 S0-Schnittstellen S₀-SST 1 bis S₀-SST 12, an die der Multiplex-Adapter MA 1 mit 4x12, also 48 Adern angeschlossen ist. An einigen der übrigen S₀- und a/b-Schnittstellen sind über eine 13. S₀-Schnittstelle S₀-SST 13 in bekannter Weise ein ISDN-Telefonteilnehmer 3, ein Terminaladapter 4, ein Personalcomputer 5 angeschlossen. Es könnten bis zu acht Endgeräte angeschlossen werden. Diese Anschlüsse sind für die weitere Betrachtung ohne Bedeutung, ebenso wie der a/b-Teilnehmer 7 über eine a/b-Schnittstelle 6.

Das digitale Übertragungssystem besteht aus zwei identischen Multiplex-Adaptern MA für 12 S₀-Basisanschlüsse (S₀-Schnittstellen) S₀-SST 1 bis S₀-SST 12 für den Einsatz in privaten Telekommunikationsanlagen TKA bzw. LAN-Anbindungen. Der erste Multiplex-Adapter MA1 wird auf der Seite der Telekommunikationsanlage TKA im LT-T Mode, der zweite Multiplex-Adapter MA2 wird am 2,6 km entfernten Ende der 2Mbit/s-Übertragungsstrecke 8 im LT-S Mode betrieben. Die Länge der Übertragungsstrecke 8 entspricht einer Dämpfung von 43 Dezibel. Die Übertragungskapazität eines Multiplex-Adapters MA beträgt 2048 kbit/s. Davon stehen 31 64 kbit/s-Kanäle für Anwendungen zur Verfügung, von denen 27 Kanäle für die transparente Übertragung von 12 Basisanschlüssen genutzt werden. Ein Kanal enthält entweder einen B- oder 4 D-Kanäle.

Die Stromversorgung der Multiplex-Adapter MA erfolgt über separate Netzgeräte NG 1, NG 2. Für den Multiplex-Adapter MA 2 ist das größere Netzgerät NG 2 wegen der Fernspeisung erforderlich. Die Fernspeisung dient der Stromversorgung aller teilnehmerseitigen Einrichtungen und der daran angeschlossenen Endgeräte. Damit entfallen zusätzliche Kosten für Stromversorgungsanschluß und Batteriepufferung. Das Netzgerät NG 2 liefert im Beispiel 12 separate 40-Volt-Versorgungsspannungen für die S₀-Schnittstellen-Fernspeisung. Dem Netzgerät NG 2 kann eine Leistung von maximal 4 W/S₀-Schnittstelle entnommen werden. Das Netzgerät NG 1 liefert die benötigte Versorgungsspannung für den Multiplex-Adapter MA1. Mit dem Stecken der Netzgeräte NG1, NG2 erfolgt automatisch die Programmierung für den jeweils richtigen Mode der Multiplex-Adapter MA. Vom Betreiber ist nur eine Versorgungsspannung von 230 V Wechselstrom bereit zu stellen.

Wenn die Übertragungsstrecke 8 von 2,6 km bei einem Leitungsdurchmesser von 0,6 mm nicht ausreicht, kann mit Zwischenregeneratoren die Übertragungsstrecke 8 nach Wunsch verlängert werden.

An dem Multiplex-Adapter MA 2, der sich z.B. in einem 2,6 km vom Multiplex-Adapter MA 1 entfernten zweiten Gebäude befindet, stehen 12 S₀-Schnittstellen SST 1 bis SST 12 für ISDN-Teilnehmeranschlüsse zur Verfügung. Jeder der ISDN-Teilnehmer kann bis zu acht Endgeräte betreiben. An die S₀-Schnittstelle SST 11 sind beispielsweise zwei Telefonteilnehmer 3, ein Datenendgerät 5, ein Faxgerät 9, ein Terminaladapter 4 mit zwei Schnittstellen X.21, V 24 angeschlossen.

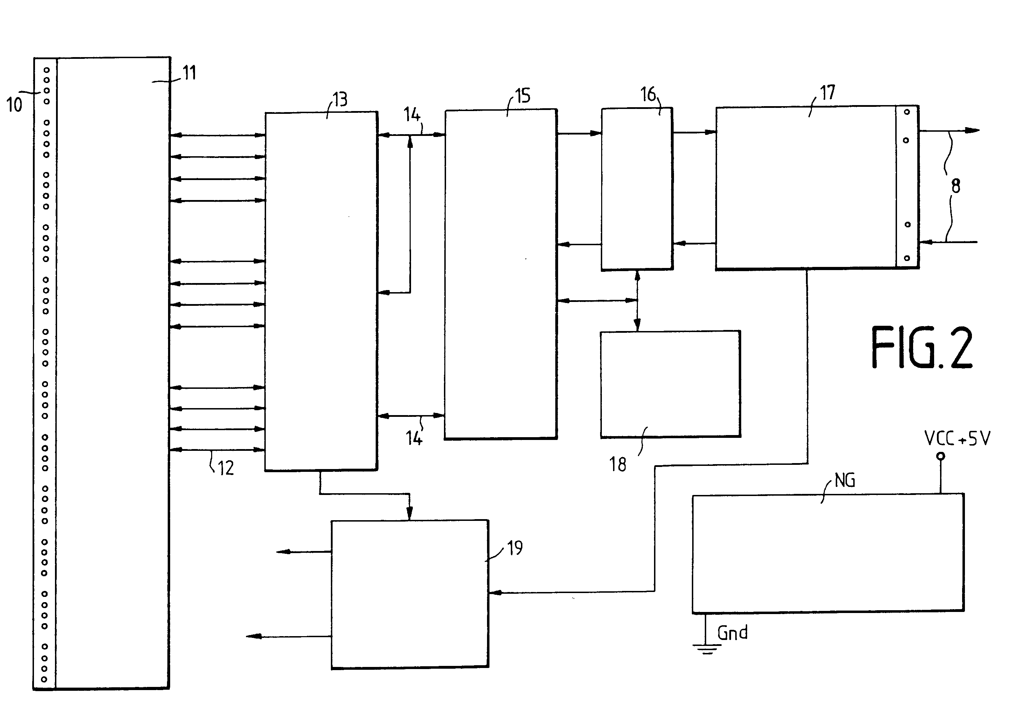

In der Fig. 2 zeigt das Blockschaltbild eines Multiplex-Adapters MA den Übertragungsweg für einen ISDN-Teilnehmer an einer der S₀-Schnittstellen.

Von der Telekommunikationsanlage TKA (Fig.1) wird pro S₀-Schnittstelle ein 192 kbit/s-Datenstrom mit den Nutzinformationen 2x B-Kanal mit jeweils 64 kbit/s und 1x D-Kanal mit 16 kbit/s gesendet. Neben der insgesamt 144 kbit/s-Nettobitrate werden 48 kbit/s für den Verbindungsaufbau bereitgestellt. Die Daten werden pro S₀-Schnittstelle auf 4 Adern, jeweils 2 Adern für Senden und Empfangen, übertragen.

Am Eingang des Multiplex-Adapters MA 1 ist gemäß der Figur 2 eine Leiste 10 mit 4x12 Anschlüssen installiert für 4 Adern pro S₀-Schnittstelle. Die 4 Adern pro S₀-Schnittstelle werden in einer sich anschließenden S₀-Übertragungseinrichtung 11 gefiltert, um Störspannungen zu beseitigen. Über eine jeweils 4 adrige Übertragungsverbindung 12 werden die Signale an eine Funktionsbaugruppe S₀-Logik und Taktratenanpassung 13 gegeben. Dort erfolgt die Taktratenanpassung von 192 kbit/s auf 2 Mbit/s. Die Nutzdaten werden mit zusätzlichen Informationen auf die 4 adrige IOM-2-Schnittstelle 14 gegeben. Die IOM-2-Schnittstelle 14 ist ein von europäischen Herstellern definierter Standard, der inzwischen auch von amerikanischen Firmen unterstützt wird. Über diese Schnittstelle 14 können bis zu 8 Basisanschlüsse übertragen werden, das bedeutet, für die 12 S₀-Schnittstellen des Multiplex-Adapters MA 1 werden 2 IOM-2-Schnittstellen 14 benötigt.

Die Daten der IOM-2-Schnittstellen 14 werden an einer Funktionsbaugruppe Koppelfeld und Transportlogik 15 empfangen und zwischengespeichert. Die zusätzlichen Informationen werden teilweise ausgewertet. Danach werden die Nutzdaten in Zeitschlitze des 2Mbit/s-Kanals gegeben. Dabei enthält ein Zeitschlitz entweder einen 64 kbit/s B-Kanal oder vier 16 kbit/s-D-Kanäle von vier S₀-Schnittstellen.

Die Rahmenbildung für die 2Mbit/s Rahmenbildung erfolgt in einer Funktionsbaugruppe Rahmenbildung 16. Dabei wird der Zeitschlitz 0 alternierend mit einem definierten Wert beschrieben, um den Rahmenanfang zu erkennen.

Eine Funktionsbaugruppe-Übertragungseinrichtung 17 sendet den 2Mbit/s Datenstrom an den zweiten Multiplex-Adapter MA 2 über die 2 Mbit/s-Übertragungsstrecke 8 (Fig.1), die über eine Leiste 20 mit 2x2 Adern angeschlossen ist. Im Multiplex-Adapter 2 wird der 2 Mbit/s Datenstrom erkannt und über dessen Übertragungseinrichtung 17 an die Funktionsbaugruppe Rahmenbildung 16 gegeben. Die Funktionsbaugruppe Rahmenbildung 16 wertet den Rahmen aus und gibt die Daten zeitrichtig an die Funktionsbaugruppe Koppelfeld und Transportlogik 15. In der Funktionsbaugruppe Koppelfeld und Transportlogik 15 werden die Daten zwischengespeichert und neu sortiert und mit Zusatzinformationen über die IOM-2-Schnittstelle 14 an die Funktionsbaugruppe S₀-Logik und Taktratenanpassung 13 gegeben. In der Funktionsbaugruppe S₀-Logik und Taktratenanpassung 13 werden die Nutzdaten von der IOM-2-Schnittstelle 14 empfangen und an die Taktrate der S₀-Schnittstelle angepaßt. Anschließend werden die Daten an die S₀-Schnittstellen einschließlich der Zusatzinformationen über die Funktionsbaugruppe S₀-Übertragungseinrichtung 11 an die Teilnehmer gegeben.

Die Steuerung beider Multiplex-Adapter MA 1, MA 2 erfolgt durch eine Funktionsbaugruppe Management 18.

Eine Funktionsbaugruppe Taktzentrale (PLL) 19 ist für den zeitrichtigen Ablauf der Schaltung verantwortlich.

Der Datentransport in der umgekehrten Richtung, vom Teilnehmer zur Telekommunikationsanlage TKA erfolgt ebenfalls in der beschriebenen Art und Weise.

Die im Ausführungsbeispiel beschriebene Anwendung des digitalen Übertragungssystems für S₀-Schnittstellen ist ebenso für U_{P0}-Schnittstellen gültig. Es ist dabei nur die reduzierte Aderanzahl zu beachten.

### BEZUGSZEICHENLISTE

- N: öffentliches Netz
- TKA: Telekommunikationsanlage
- SST 1-SST 12: S₀-Schnittstelle
- MA 1, MA 2: Multiplex-Adapter
- NG 1, NG 2: Netzgerät
- S₀-SSt 1-12: S₀-Schnittstelle (Basisanschluß)

- 01: U_{K0}/S₀-Schnittstelle
- 02: S 2m-Schnittstelle
- 03: Telefon-Teilnehmer
- 04: Terminaladapter
- 05: Personalcomputer
- 06: a/b-Schnittstelle
- 07: a/b-Teilnehmer
- 08: 2 Mbit/s-Übertragungsstrecke
- 09: Faxgerät
- 10: Anschlußleiste
- 11: S₀-Übertragungseinrichtung
- 12: Übertragungsverbindung
- 13: Funktionsbaugruppe (S₀-Logik und Taktratenanpassung)
- 14: IOM-2-Schnittstelle
- 15: Funktionsbaugruppe (Koppelfeld-Transportlogik)
- 16: Funktionsbaugruppe (Rahmenbildung)
- 17: Funktionsbaugruppe (Übertragungs einrichtung)
- 18: Funktionsbaugruppe (Management)
- 19: Funktionsbaugruppe (Taktzentrale)
- 20: Leiste

## Patentansprüche

1. Digitales Übertragungssystem für Basisanschlüsse (S₀/U_{P0}-Schnittstelle) im ISDN für private Telekommunikationsanlagen zum Anschluß von Endgeräten,
dadurch gekennzeichnet, daß
zwischen der Telekommunikationsanlagen-Schnittstelle (S₀/U_{P0}-SST 1 bis S₀/U_{P0}-SST 12) und der Teilnehmerendgeräte-Schnittstelle (SST 1 bis SST 12) mindestens zwei Multiplex-Adapter (MA 1, MA 2) angeordnet sind, die über eine vieradrige 2 Mbit/s-Übertragungsstrecke (8) miteinander verbunden sind und die jeweils eine Übertragung von bis zu zwölf ISDN-Basisanschlüssen (S₀/U_{P0}-SST 1 bis S₀/U_{P0}-SST 12) und von B- und D-Kanälen ermöglichen, wobei jeder Multiplex-Adapter (MA 1, MA 2) aus einem Logik-Teil, gebildet aus einer S₀/U_{P0}-Schnittstellen-Übertragungseinheit (11), die über Gruppen von vieradrigen/zweiadrigen Leitungen (12) an eine S₀/U_{P0}-Schnittstellen-Logik mit Taktratenanpassung (13) und über Schnittstellen(14) an ein Koppelfeld mit Transportlogik (15) geführt ist, aus einer Einrichtung zur Rahmenbildung (16), einer Übertragungseinrichtung (17), einer Taktzentrale (19), einer Funktionsbaugruppe Management (18), besteht.

2. Digitales Übertragungssystem nach Anspruch 1,
dadurch gekennzeichnet, daß
jeder Multiplex-Adapter (MA 1, MA 2) auf einer Doppeleuropakarte aufgebaut ist.

3. Digitales Übertragungssystem nach Anspruch 1,
dadurch gekennzeichnet, daß
die Stromversorgung der Multiplex-Adapter (MA 1, MA 2) und der teilnehmerseitigen Einrichtungen durch externe Netzgeräte (NG 1, NG 2) erfolgt.

## Claims

1. Digital transmission system for basic accesses (S₀/U_{P0}-interface) in ISDN for private telecommunication installations for the connection of terminal equipment,
**wherein,**
between the telecommunication installation interface (S₀/U_{P0}-SST 1 to S₀/U_{P0}-SST 12) and the participant terminal equipment interface (SST 1 to SST 12) at least two multiplex adapters (MA 1, MA 2) are arranged, which are connected together by way of a four-core 2 Mbit/s-transmission link (8) and which allow, in each case, a transmission of up to twelve ISDN basic accesses (S₀/U_{P0}-SST 1 to S₀/U_{P0}-SST 12) and of B and D channels, where each multiplex adapter (MA 1, MA 2) consists of a logic component, made up from an S₀/U_{P0}-interface transmission unit (11), which is led by way of groups of four-core / two-core cables (12) to an S₀/U_{P0}-interface logic with timing rate adaptation (13) and by way of interfaces(14) to a switching matrix with transport logic (15), an equipment unit for frame generation (16), a transmission equipment unit (17), a timing pulse generator central (19), and a function assembly group management (18).

2. Digital transmission system according to Claim 1,
**wherein,**
each multiplex adapter (MA 1, MA 2) is built up on a double eurocard.

3. Digital transmission system according to Claim 1,
**wherein,**
the power supply to the multiplex adapters (MA 1, MA 2) and to the equipment on the participant side is provided by external power supply units (NG 1, NG 2).

## Revendications

1. Système de transmission numérique pour des connexions de base (interface S₀/U_{P0}) dans le réseau ISDN pour des centraux de télécommunication privés pour raccorder à des terminaux
caractérisé en ce que,
entre l'interface du central de télécommunication (S₀/U_{P0} SST 1 à S₀/U_{P0} SST 12) et l'interface du terminal commutée (SST 1 à SST 12), sont disposés au moins deux multiplexeurs (MA1, MA2) qui sont reliés l'un à l'autre par une liaison de transmission à quatre fils de 2 Mbits/s (8) et qui permettent chacun la transmission d'un nombre allant jusqu'à douze connexions de base ISDN (S₀/U_{P0} SST 1 à S₀/U_{P0} SST 12) et des canaux B et D, dans lequel chaque multiplexeur (MA1, MA2) se compose d'une partie logique formée d'une unité de transfert d'interfaces S₀/U_{P0} (11) qui passe par des groupes de lignes à quatre fils/deux fils (12) pour aller vers un circuit logique d'interface S₀/U_{P0} avec adaptation de vitesse d'horloge (13), et par des interfaces (14) pour aller vers un réseau de connexions multiples comportant un circuit logique de transport (15), d'un dispositif de formation d'une trame (16), d'un équipement de transmission (17), d'une centrale d'impulsions (19) et d'un système de gestion des modules fonctionnels (18).

2. Système de transmission numérique d'après la revendication 1,
caractérisé en ce que
chaque multiplexeur (MA 1, MA 2) est agencé sur une double carte Europe.

3. Système de transmission numérique d'après la revendication 1,
caractérisé en ce que
l'alimentation électrique des multiplexeurs (MA 1, MA 2) et des équipements côté commutation s'effectue par des blocs d'alimentation extérieurs (NG 1, NG2).
